# EUROPEAN PATENT APPLICATION

(11) **EP 2 200 003 A1**
(43) Date of publication of application: **23.06.2010**
(21) Application number: 09180475.7
(22) Date of filing: 22.12.2009
(51) Int. Cl.: G08B 31/00, G05B 19/00, G06F 9/00, G06Q 10/00, G05B 15/00

(54) **Pictorial representations of historical data of building systems**

(30) Priority: 22.12.2008 US 203340 P; 16.10.2009 US 580349
(71) Applicant: Schneider Electric Buildings AB, 213 75 Malmö (SE)
(72) Inventor: Williamson, Jon L., Newburyport, MA 01950 (US)
(74) Representative: Simons, Alison

(57) **Abstract**

A system or apparatus and method for analyzing building systems includes an input mechanism for gathering data over time from building systems and a graphical display of a building or portion of a building. The system has an interface device for receiving user input. A controller drives the display and graphically represents the selected portion of the building and the selected building systems. The controller displays data graphically on the display in time lapse from the building system to be analyzed and other building systems. The system allows a user to select at least one building system to be analyzed and at least one other building system that may influence the at least one building system to be analyzed.

## Description

### CROSS-REFERENCE TO RELATED APPLICATIONS

The present application claims the benefit of Provisional Patent Application No. 61/203,340 filed December 22, 2008, which is incorporated herein by reference.

### FIELD OF THE INVENTION

The present invention relates to a system to display information concerning the status of various components of a building's automation and security systems. More specifically, it relates to a system for the pictorial display of such information for a past time or time period.

### BACKGROUND OF THE INVENTION

It is becoming ever more important for owners and managers of commercial buildings to be able to create and maintain:
1. safe buildings;
2. comfortable buildings; and
3. efficient buildings.

In order to do so, these owners and managers rely heavily on electronic building automation systems, for the control of processes such as heating, ventilation, and air conditioning, and electronic security systems for the control of processes such as physical access, both to the building and to various parts of the building, and information access.

It is important for the owners and managers of a building to be able to study building conditions that occurred in the past. Using building status information gathered from a past time or time period, a building's owners or managers can analyze the performance of the building's automation and security systems. For example, a building manager may, among other uses, use this information to
1. determine the cause of an equipment failure (and how to prevent that failure in the future);
2. determine the cause of an undesired environmental condition (and how to prevent that condition in the future); and
3. to study trends.
The more clearly this historical status information can be presented, the more effective a building manager can be in his analysis.

Currently, a building manager can view this historical status information in the following ways:

1. Logs - A list of values or messages from the building automation or security system that are stored along with timestamps indicating the time at which each value or message was recorded. These lists are viewed in their raw form as simple text tables. Logs can be used to capture several types of historical data:
Trend Logs - Values generated for specified components are periodically monitored and stored with timestamps. These historical logs may be automatically or manually stored. The frequency with which values are stored depends on the system configuration.
Alarm and Event Logs - Messages generated by the system on set conditions are stored with timestamps. These may be alarms or events such as a valid entry through a specified door or an error condition.

2. Charts - Values from historical logs that are plotted against time. These Charts may also show a statistical representation of the values such as averages and standard deviations. A given Chart may also contain data from multiple historical logs. Charts may also be interactive permitting the user to move forward and backward in time and to determine which Logs to display.

3. Reports - Logs may be assembled into a Report. A Report may be simple text from Logs or Charts. Reports may also contain a combination of Logs and Charts. Although these Charts and Reports make it easier to understand historical status information than Logs alone do, there is some information that cannot be clearly represented even by using Charts and Reports. The deficiency is most noticeable when trying to correlate data from multiple Logs. For example, a Chart may be able to show an air supply temperature and the status of a fan within an air handler at a particular time a week ago, but it does not show how the supply temperature is or is not affected by the fan and its status. It is an object of the present invention to show more clearly how the condition of one or more components of building automation and security systems affect one or more other components of security systems.

Unfortunately, there are deficiencies in conventional systems of logs and charts that lead to lack of recognition of relationships between systems. Furthermore, conventional graphical displays show only current data and not historical data.

### SUMMARY

In contrast to the above-described conventional systems, the system for analyzing building systems presents data in such a form that allows for ease in correlation of various systems. The system and method graphically show information and spatial relationship in the building.

One embodiment is a system for analyzing building elements. The system has an input mechanism, a graphical display of a building, an interface device, and a controller. The input mechanism is for gathering data over time from at least one building element to be analyzed and at least one other building element. The interface device receives user input. The controller is driving the display and graphically representing the selected portion of the building and the selected building elements. The controller displays graphically in time lapse data from at least one building element to be analyzed and at least one other building element.

In an embodiment, the data is stored in digital form. In an embodiment, the graphic display and the interface device is merged as a touch screen.

In an embodiment, the building system to be analyzed is a safety system. In an embodiment, the building system to be analyzed is a climate system. In an embodiment, the building system to be analyzed relates to the efficiency of the building.

In an embodiment, the input mechanism for gathering data is a data logger and the rate of logging can be varied.

In an embodiment, the plurality of building elements includes at least one building element to be analyzed and the at least one other building element wherein the data has been recorded over time in the data logger.

In an embodiment, the rate of data collection is the same over multiple elements. In an embodiment, the rate of data collection is set individually per element. In an embodiment, the data is recorded when an event occurs.

In an embodiment, the building displayed is one room of the building. In an embodiment, the building displayed is the entire floor of a building.

In an embodiment, a system for analyzing an element associated with a building includes an input mechanism, a graphical display of a structure related to the building, an interface device, and a controller. The input mechanism is for gathering data over time from at least a pair of elements. The interface device receives user input. The controller is driving the display and graphically representing the selected structure and the selected elements. The controller displays graphically data from the elements in time lapse.

In an embodiment, the elements include humans.

In an embodiment, the graphical display of the structure related to the building is a portion of an air handling system.

In an embodiment, the element to be analyzed is a security system.

A method of analyzing a system of a building of the invention includes selecting at least one building system to be analyzed. At least one other building system that may influence the at least one building system to be analyzed is selected. Data is gathered for the at least one building system to be analyzed and the at least one other building system. The data point for the at least one building system to be analyzed and the at least one other building system need to be displayed is determined. The data for the at least one building system to be analyzed and the at least one other building system is synchronized. The data is graphically displayed for the at least one building system to be analyzed and the at least one other building system on a display which graphically displays the building wherein the graphical data can be compared to determine how building systems influence each other.

In an embodiment, a time range to compare the system is selected. In an embodiment, a particular region of the building to examine is selected.

In an embodiment, the time rate of the display, the time lapse, can be adjusted by the user. In an embodiment, the sampling rate can be adjusted by the user.

In an embodiment, the data for both the at least one building element and the at least one other building element is from a collection of numerous building elements being systemically sampled.

In an embodiment, the data is gathered from a library.

In an embodiment of a system for analyzing an element associated with a facility, the system includes an input mechanism and a graphical display of a selected portion related to the facility. The input mechanism is for receiving data related to the element. The system has an interface device for receiving input from a user. A controller drives the graphical display and graphically representing the element a selected portion related to the facility.

In an embodiment, the facility is a parking lot. In an embodiment, the facility is a train yard. In an embodiment, the facility is a harbor.

These aspects of the invention are not meant to be exclusive and other features, aspects, and advantages of the present invention will be readily apparent to those of ordinary skill in the art when read in conjunction with the following description, appended claims and accompanying drawings.

### BRIEF DESCRIPTION OF THE DRAWINGS

The foregoing and other objects, features, and advantages of the invention will be apparent from the following description of particular embodiments of the invention, as illustrated in the accompanying drawings in which like reference characters refer to the same parts throughout the different views. The drawings are not necessarily to scale, emphasis instead being placed upon illustrating the principles of the invention.

FIG. 1 is a schematic of a system for analyzing building systems according to the invention;

FIGS. 2A and 2B is a schematic of a method for displaying a plurality of systems graphically for analyzing building systems;

FIG. 3 shows an example of a pictorial display of building automation and security systems;

FIGS. 4A - 4D show a pictorial display of a building with the temperature and the status of the air handling system graphically represented;

FIGS. 5A - 5F show a pictorial display of a building with the temperature, the status of air handling system, and the number of people in a room graphically represented;

FIGS. 6A - 6C show a pictorial display of an air conditioning system for a building;

FIGS. 7A - 7D show a pictorial display of building security systems;

FIG. 8 is an elevation view of a building; and

FIG. 9 is a perspective view of a building.

### PREFERRED EMBODIMENTS OF THE INVENTION

A system for analyzing building systems has information on both the systems and the building. The system displays systems graphically on a display that also displays features of the building. Through viewing the display and seeing the information graphically including spatial relationships between systems, a user can analyze relationships and cause and effects between systems.

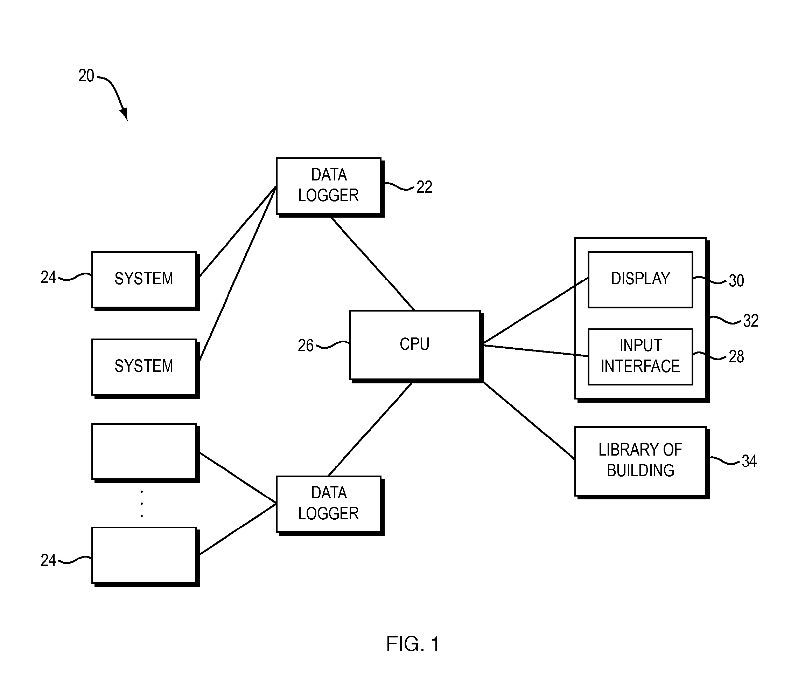

Referring to FIG. 1, a schematic of a system 20 for analyzing building systems is shown. The system 20 has a plurality of data loggers, input mechanisms, 22 for gathering data over time from a plurality of systems 24. The system 20 has a controller or central processing unit 26 for controlling the system 20 including an interface device 28 for receiving user input and a graphical display screen 30.

In one embodiment, the interface device 28 is a keyboard and a pointer controller such as a mouse or tracker ball. In another embodiment, the interface device 28 and the graphical display screen 30 are incorporated into one device as a touch screen 32.

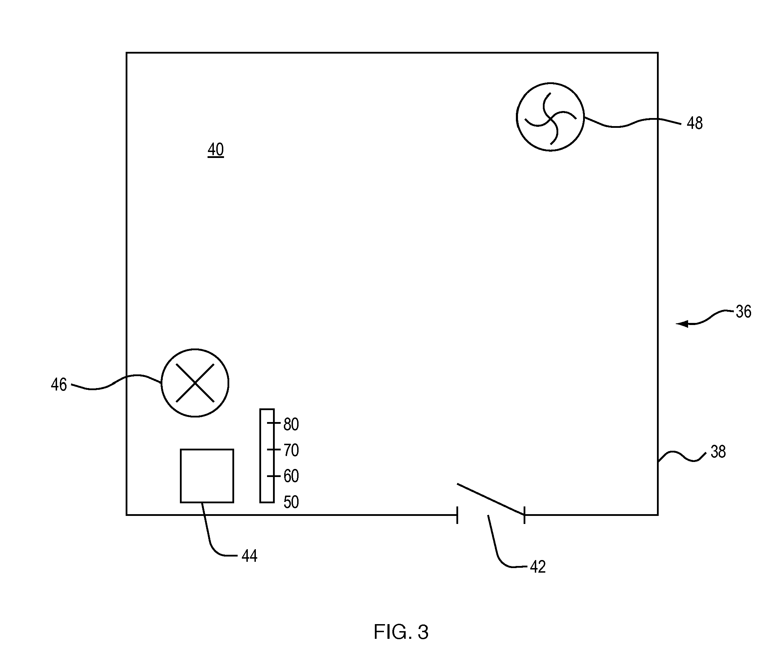

The system 20 in addition, has a library or database 34 of the building. The library 34 is accessible by the controller 26 to display images or representations of the building or portions of the building 36, such as shown in FIG. 3.

The system 20 is for analyzing a building system. The building system can have subsystems and/or elements. For example, in discussions regarding FIG. 3, a ventilation system has a temperature monitor 44 and a pair of fans 46 and 48. While each may be considered a system, subsystem, or element, the building system, including the subsystems and/or elements, are referred to as elements as we go further.

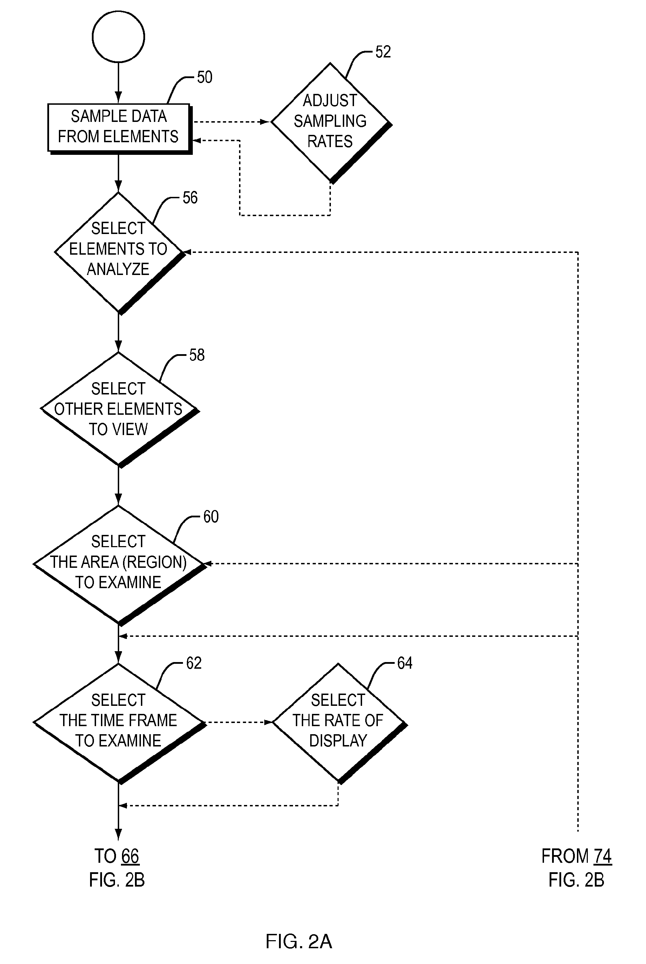

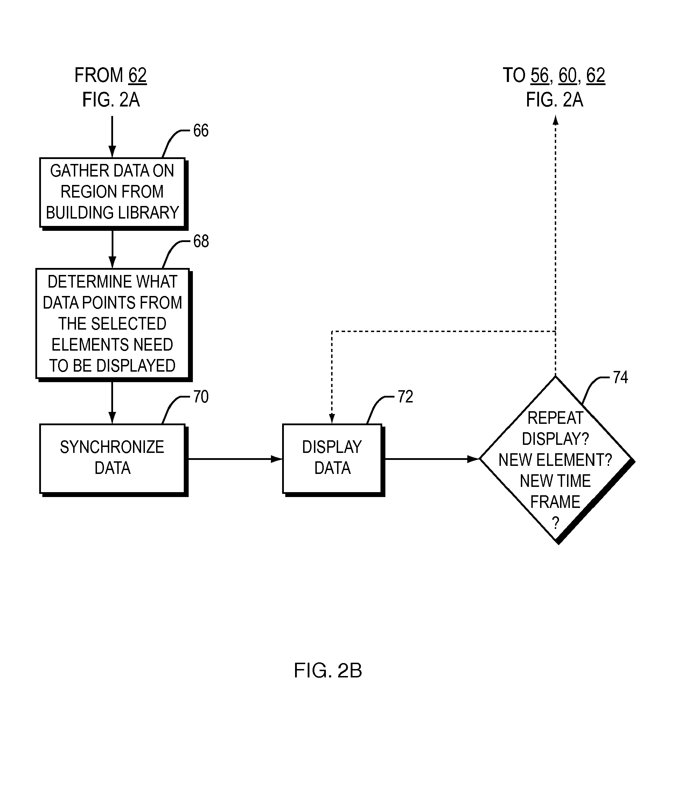

Referring to FIGS. 2A and 2B, a schematic of a method for displaying a plurality of elements 24 graphically for analyzing building elements 24 is shown. The system 20 systematically gathers data from various elements as represented by block 50. The system can either store the data internally or have the capability to gather data when needed from other systems that store the information.

As explained in more detail below, the data can come in various forms such as the temperature or the relative humidity which would vary over a range or the data is simple if a device is on or off, such as a light or fan. However depending on the devices, items such as lights or fans may have various levels while in the on mode, such as low, medium, or high.

Still referring to FIGS. 2A and 2B, the system 20 is capable in one embodiment, of varying the sampling rate of the data as represented by decision diamond 52. Depending on the elements, it may be desirable to record data at set intervals or when the element changes from one state to another state (i.e., from on to off or off to on). In most building elements 24, it would not be beneficial to record information at a rate of more than once every minute. Multiple factors can influence the sampling rate including but not limited to capability of sampling / monitoring device and amount of data storage capability.

While default rates are typically set, a user could configure the sample rate. Furthermore, the system 20 could have controls wherein the element 24 monitored starts sampling at a higher rate when some trigger is reached. For example, if the system 20 is monitoring room temperature and recording every ten minutes, the element 24 monitored could automatically increase the rate of sampling of the temperature and other elements such as fans, heating, and cooling elements if the temperature drops below 60° F or rises above 80° F.

Typically the system 20 will be gathering and storing data in the data loggers 22, as seen in FIG. 1. At some point in time, a user, such as a building owner or manager, will want to analyze some monitored elements 24. Referring back to FIGS. 2A and 2B, a user using the input interface 28, as seen in FIG. 1, would select the element or elements 24 monitored to be analyzed as represented by decision diamond 56. The interface device 28 could be set to allow a user to select elements 24 from a pull down menu or click on a graphical representation of the building.

In addition to the elements 24A to be analyzed, the user selects other elements 240 to view concurrently as represented by decision diamond 58. While elements 24A to be analyzed are broken out from other elements 240, the system 20 does not typically distinguish whether the element is analyzed or another element. All the elements 24 get projected onto a screen. In this embodiment, it is the user, not the system 20, which determines which element 24 is influenced by an other element 24; that is the relationship between elements 24.

The user may select the region of the building to view as represented by decision diamond 60. The user can select the region by clicking regions or graphically selecting a region on the screen 30.

In one embodiment, the system 20 defaults to a region that includes all elements to be viewed and extends to the next wall 38 in the building 36 as seen in FIG. 3. Certain components of the systems, the elements 24 monitors are shown in relation to each other. A floor 40 of the building 36 is represented. The floor 40 has a door 42, a temperature monitor location 44, and a pair of fans 46 and 48. From looking at the graphical display 30 of the building 36, the user can easily see that the first fan 46 is closer to the temperature monitor 44 than the second fan 48.

Values for the components may be represented as text, but they may alternatively or simultaneously be represented pictorially. For example, the status of a fan 46 or 48 may be shown by "ON" when in operation or by spinning fan blades as for fan 48. The status of a fan may be shown by "OFF" when not in operation or by stationary fan blades as for fan 46. Along with each individual measured value, the pictorial or graphical display 30 shows the relation of the components, the elements 24, to each other and to a section of the building 36 such as here with a specified floor.

Thus, a preferred embodiment of the present invention is a method to pictorially view pictorial information contained in logs of building automation and security systems for a past time or time period. A building manager can, therefore, view information concerning various components, how the components relate to one another, and how the condition of one component may have affected the condition of another component. For example, as shown in FIG. 3, it would be important to know if the fan 46, which is close to temperature monitor 44, is not working and is probably related to any increase in temperature shown by temperature monitor 44. If the fan 48 were not working, it would be less likely that it were the cause of such an increase in temperature.

Referring back to FIG. 2A, the user can select the time frame to be examined as represented by block 62. In that the system 20 is showing time lapse of data, the user may decide to speed or slow the time lapse speed as represented by the "Select the rate of display" decision diamond 64.

The CPU or controller 26 of the system 20, as seen in FIG. 1, gathers data on the region of the building selected as represented by block 66 in FIG. 2B to allow the graphical representation.

The system 20 can be configured in numerous ways regarding the selection of the elements 24 monitored. The system 20 can be configured such that a user selects a single component or element 24 with a specific defined location. One alternative would be to select a system (or element) 24, such as a cooling system, that covers a large portion of the building and has numerous monitoring locations. The system 20 determines what monitoring locations or data points need to be included as represented by block 68. The monitoring locations are determined based on several factors including the region of the building selected to be graphically represented. For example, if the cooling system was selected in the embodiment shown in FIG. 3 and the specific room, the system 20 would determine that fans 46 and 48 need to be included and not a fan that does not affect the room.

Still referring to FIGS. 2A & 2B, in that various systems are going to be displayed, the CPU or controller 26 of the system 20 correlates or synchronizes the data received from the data loggers 22 to be displayed as represented by block 70. For example, if the temperature data for the example shown in FIG. 3 is recorded every 30 seconds while the fan data is collected every minute, the records are not one for one and the CPU 26, as seen in FIG. 1, needs to correlate the data. Likewise, if the fans 46 and 48 were recorded only when they changed status, (i.e., on to off or "off" to "on"), those specific times would need to be correlated or synchronized with the other data.

Still referring to FIGS. 2A and 2B, the data of the various elements 24 selected is then graphically represented on the display 30 as represented by block 72. The user can chose to view the time lapse once or repeat the image in a loop. The ability to repeat or select alternative data, rates, etc. is represented by a decision diamond 74 and multiple paths in FIG. 2B.

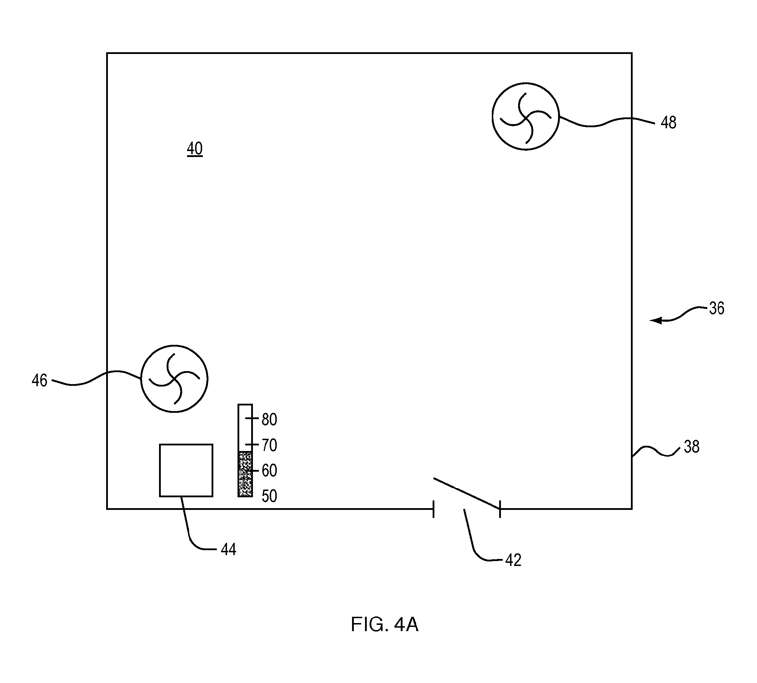

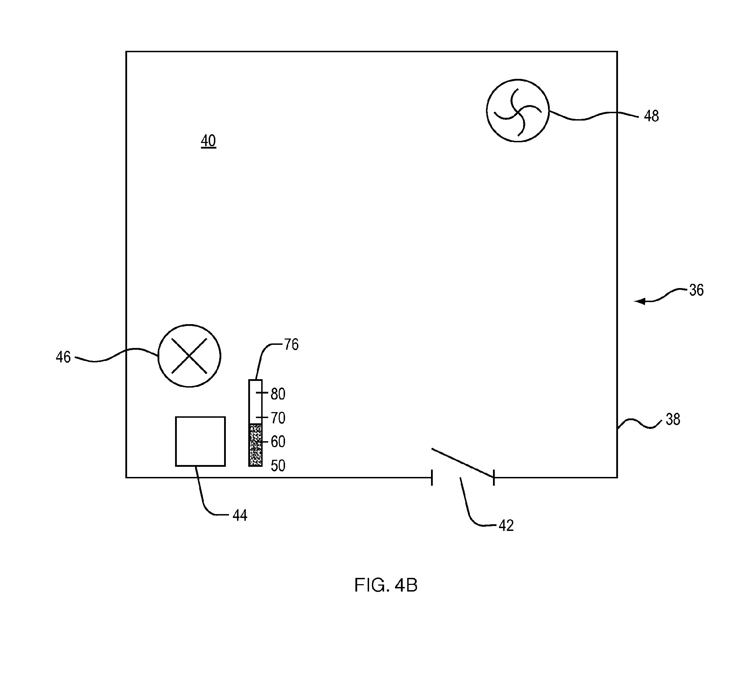

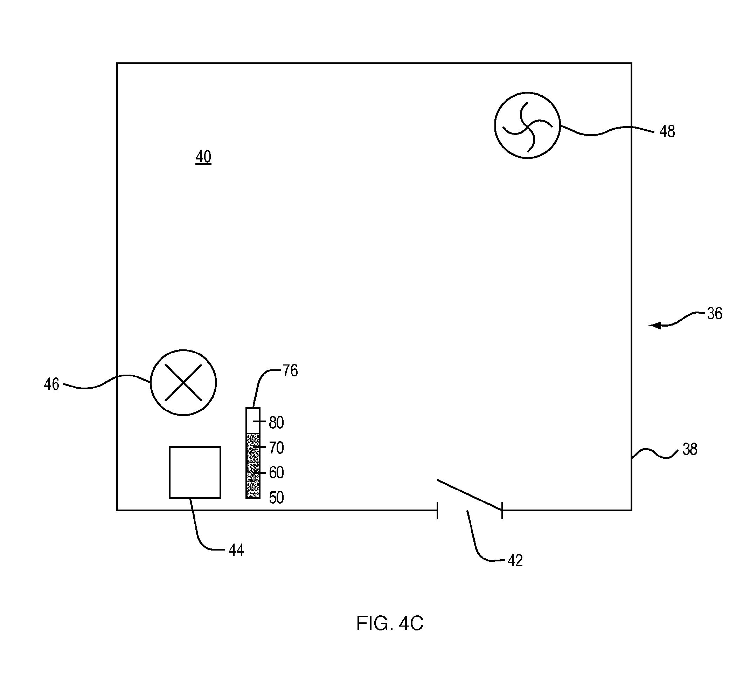

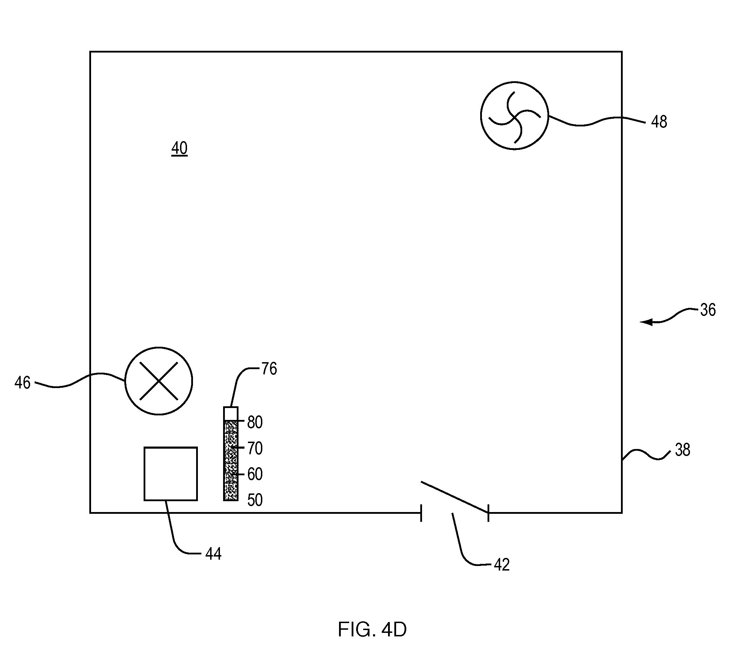

While FIG. 3 shows a portion of the building 36 at one time period in the past, FIGS 4A - 4D show the portion of the building 36 at four distinct times. The fan 46 is running in FIG. 4A. The fan 46 is shown stopped in FIG. 4B and the temperature is increasing in FIGS. 4C and 4D. The temperature as represented by the bar graph 76 shows the temperature is 68°F, 68°F, 73°F, 80°F in FIGS. 4A - 4D respectively. The user can determine by review of the graphical display 30, that the temperature rise was directly related to the loss of the fan 46.

While the graphical display 30 is shown in this patent as a black and white figure, the graphical display 30 is in color in an embodiment. The temperature gauge in addition to moving vertically also has color changes from blue to red as the temperature increases.

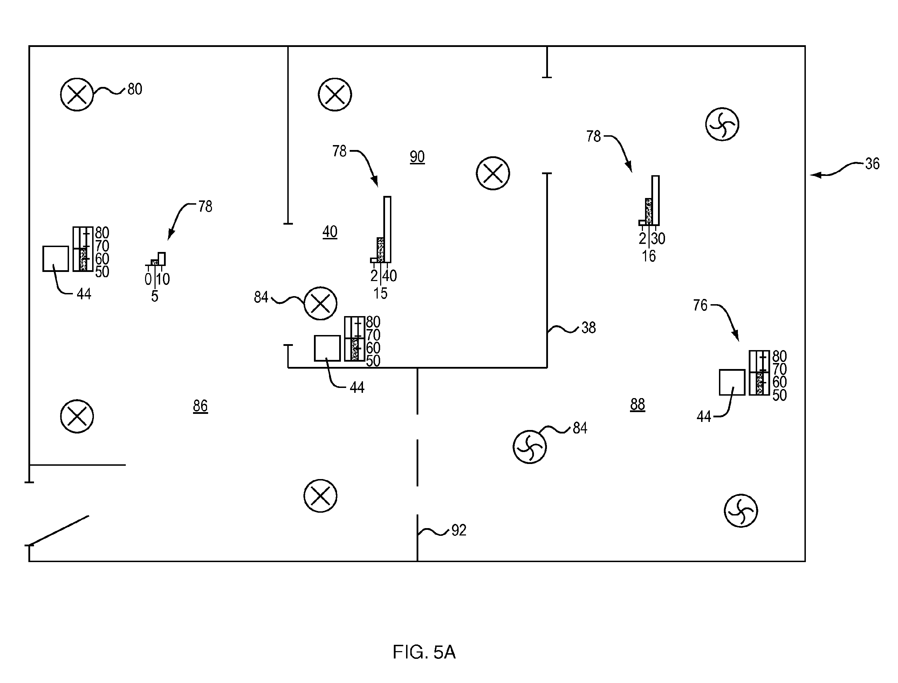

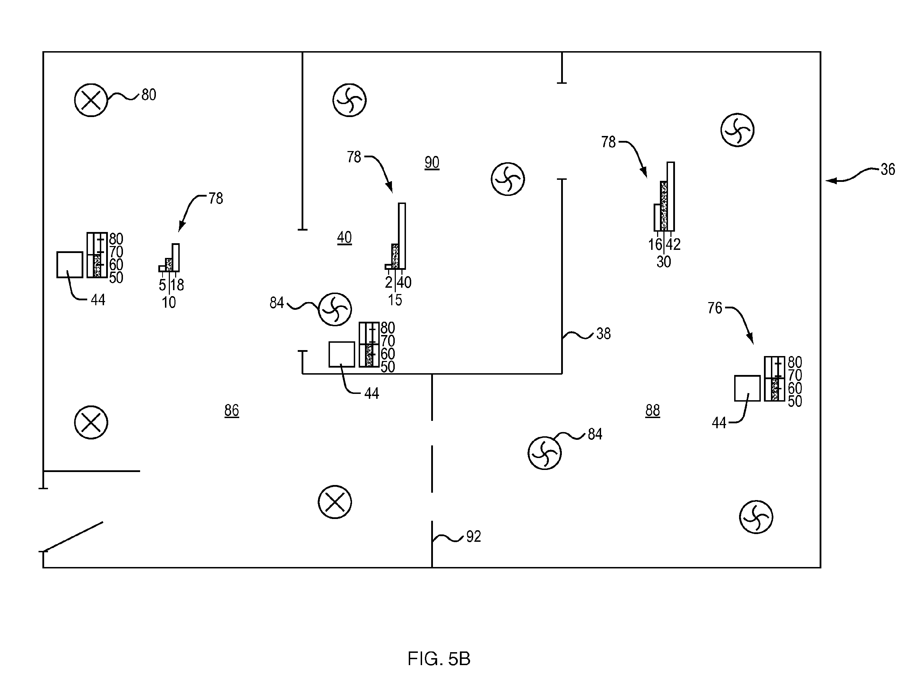

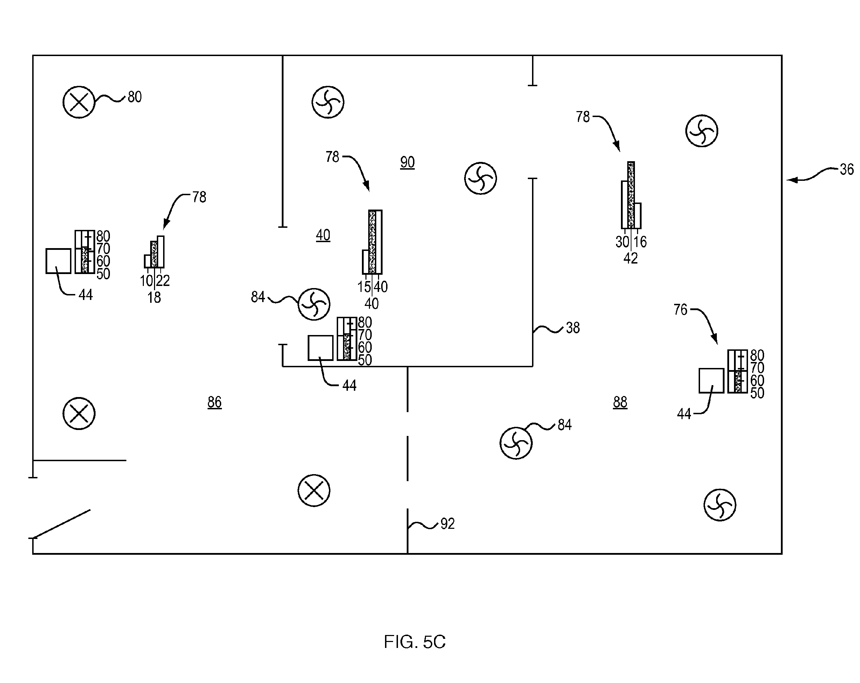

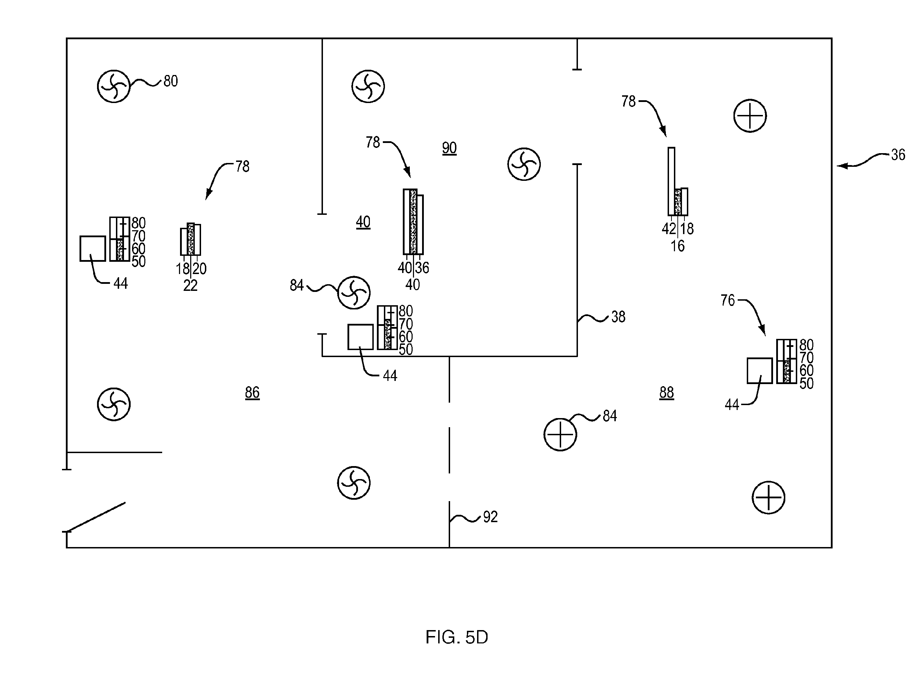

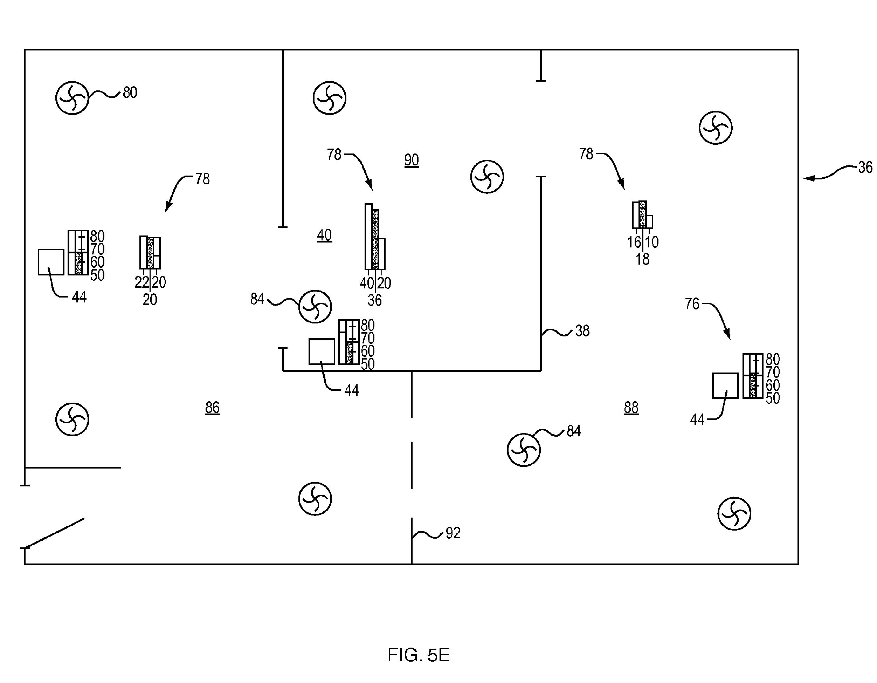

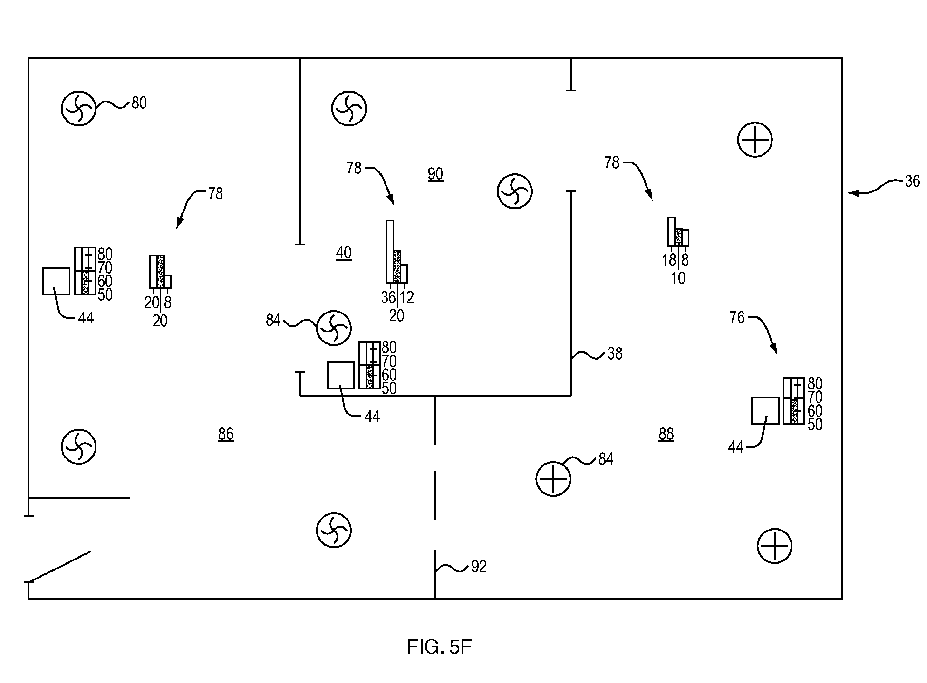

While elements 24 monitored are generally contemplated to be mechanical systems such as lights and heating, it is recognized that other elements 24 could be monitored such as the number of persons in a room. Referring to FIGS 5A -5F, a graphical representation of three rooms 40 of a restaurant is shown. The system 20 graphically displays the number of persons in a room, the temperature, and the status of the air handling system. While still displaying as a time lapse, the system 20 in addition to showing the current valve for the time value, shows lead and lagging data (i.e., past, current, and future). The current value is current for the time lapse and not the actual current.

FIGS. 5A - 5F show six (6) different time periods. For this example of the system 20, the time frames are thirty (30) minutes apart. It is recognized that the system 20 would generally be using a sample /display rate of less than thirty (30) minutes wherein there would be several displays between the displays shown.

The three rooms, room one 86, room two 88, and room three 90 are connected and air can flow between the rooms 40. Each room 40 has a temperature sensor or monitor 44 and a bar graph 76 representing the temperature. Each room has an air handling system or element with a series of fan symbols on the display 30 to symbolize the location of the vents. It is contemplated that the system 20 has a series of detectors to approximate the number of persons in a room 40, for example, a detector at each entrance / exit. The dash line 92 represents the split between room one 86 and room two 88.

While the data is graphically represented in FIGS. 5A - 5F, the data is listed below because of the limitation of patent drawings.

**Table 1**

| FIG. | Time | People Rm 1 | People Rm 2 | People Rm 3 | Temp Rm 1 | Temp Rm 2 | Temp Rm 3 | Fan Rm 1 | Fan Rm 2 | Fan Rm 3 |
|---|---|---|---|---|---|---|---|---|---|---|
| 5A | 1600 | 5 | 16 | 2 | 68° F | 68° F | 68° F | Off | On | Off |
| 5B | 1630 | 10 | 30 | 15 | 70° F | 68° F | 68° F | Off | On | On |
| 5C | 1700 | 18 | 42 | 40 | 71° F | 68°F | 70° F | Off | On | On |
| 5D | 1730 | 22 | 16 | 40 | 68° F | 68° F | 74° F | On | Off | On |
| 5E | 1800 | 20 | 18 | 36 | 68° F | 70° F | 68° F | On | On | On |
| 5F | 1830 | 20 | 10 | 20 | 68° F | 68° F | 68° F | On | Off | On |

The user studying the display 30, as seen in FIG. 1, would be able to see that the temperature in room three 90 climbs in part because the air handling system in room two 88 is off.

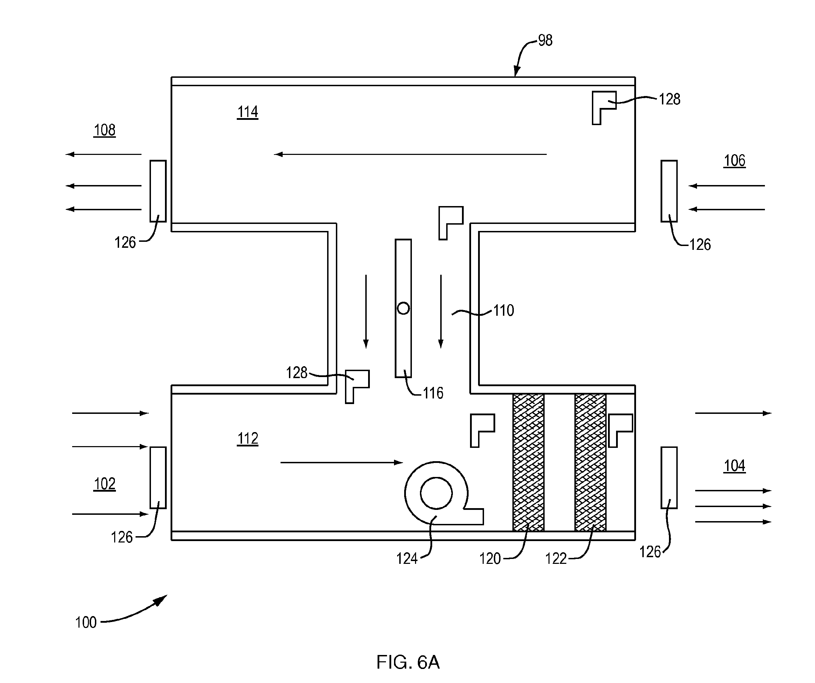

Referring to FIGS. 6A-6C, a pictorial display of an air conditioning system 98 is shown. The air conditioning system or heat exchange system or element 98 conditions the air for a building. The element 98 has an "H" shaped vent unit 100 with an air inlet 102 that receives outside air, an air register 104 which places air into the building, and an air return 106 which draws air from the building and an air exhaust 108 which expels the air to the environment. The "H" shaped vent unit 100 of the heat exchange system 90 has a cross-over duct 110 extending between the air supply side 112 and the air return side 114. The cross-over duct 110 has an air mixing baffle 116 which opens and closes to adjust the amount of air from the air return side 114 that is returned back to the air supply side 112. The air supply side 112 has a chiller exchanger 120 and a heater exchanger 122 in proximity to the air register 104. The chiller exchanger 120 and the heater exchanger 122 are used for either cooling or heating the air as it passes over the exchange. In addition, the air conditioning or heat exchange system or element 98 has one or more blowers 124 for moving the air through the element 98. The element 98 in addition to having items that influence the air or control the path of the air has numerous monitoring devices including thermal couples or thermometers 126 at various locations such as at the air inlet 102, the air register 104, the air return 106, and the air exhaust 108. In addition, there are pressure monitoring devices 128 such as at the air register 104, the air return 106, and the cross-over duct 110.

Referring to FIG. 6A, if a building occupant is complaining about the quality of the air, a user, such as a facility manager, could pull up the data on the graphic display screen 30 such as represented in FIG. 1, and determine that the mixing baffle 116 is stuck in an extreme position therein returning a larger percentage of air from the air return side 114 to the air supply side 112 and potentially not meeting the minimum fresh air requirements.

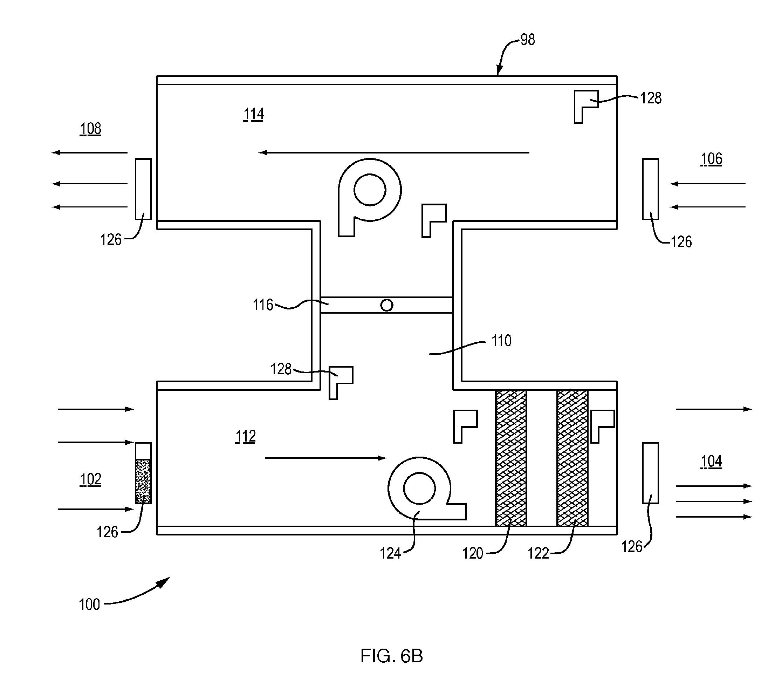

Referring to FIG. 6B, if the user determines that the building is warmer than desired, by looking at the display, the user may determine over a period of time that the temperature associated with the air inlet 102 climbs steeply which may be the result of its placement related to other devices and/or the sun's radiation. In addition, likewise, it may be determined that the temperature at the air return 106 is lower than the temperature at the air inlet 102, and the mixing baffle 116 is closed in the cross-over duct 110, for efficiency purposes; it may be determined that mixing a larger portion of return air from the air return side on line 114 to the air supply side 112 would achieve the desired comfort factor.

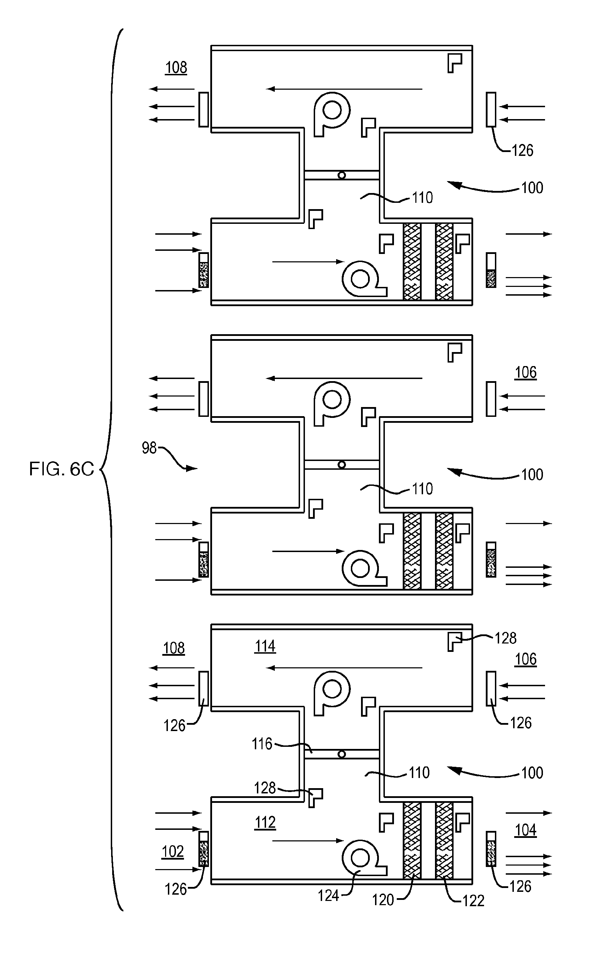

Referring to FIG. 6C, the pictorial display of the heat exchange system or element 98 shows three (3) individual units 100. The user may desire to compare units 100 in different buildings, different floors, or portions of buildings to see how similar devices operate differently during the day. The temperature at the air inlet 102 for each of the elements 90 show the same temperature, wherein two (2) of the three (3) units 100 show an air register 104 temperature which is higher than the third. The user in viewing the three (3) units 100 can determine whether the criteria is similar for each such unit 100 as the mixing baffle 116 is open to the same percentage or that the blowers 124 are on approximately the same amount of time. In addition, to the other measuring devices, the system or element 90 can have energy efficiency numbers or diagrams showing how much power is being used to drive the element 90.

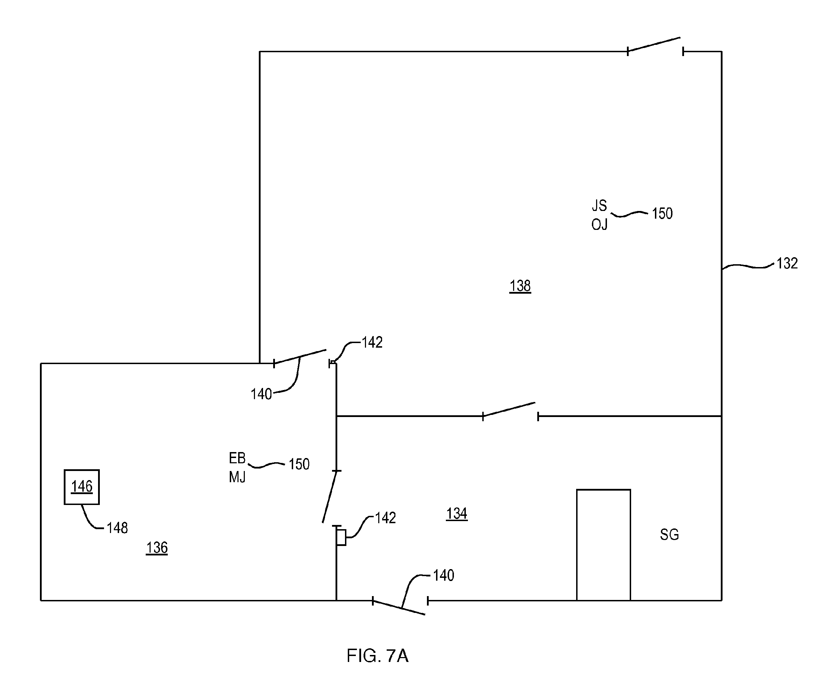

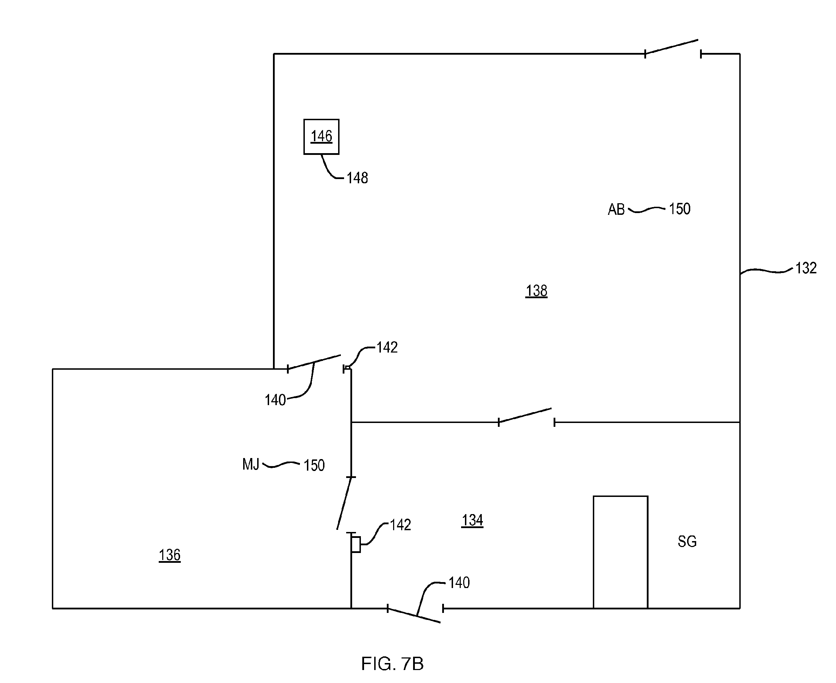

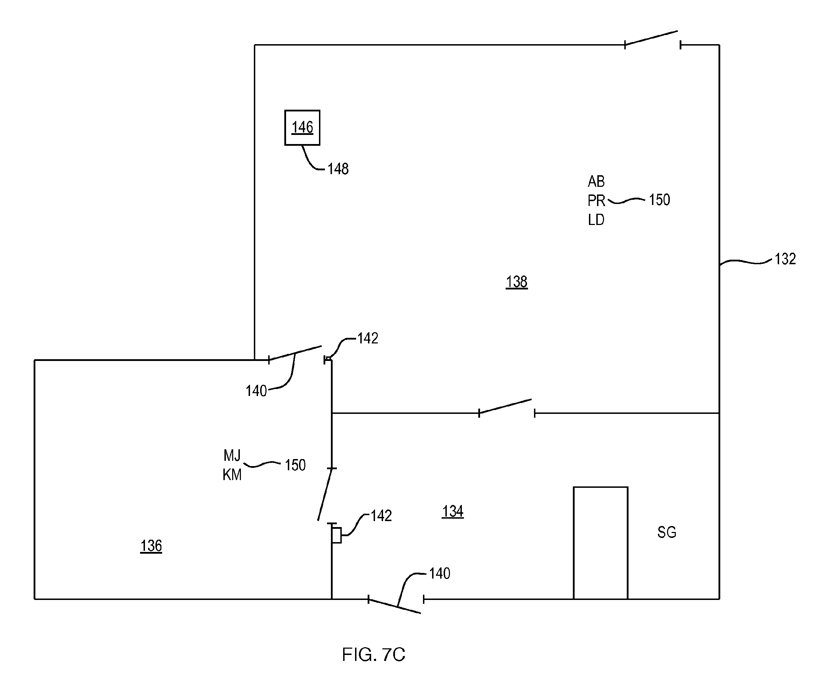

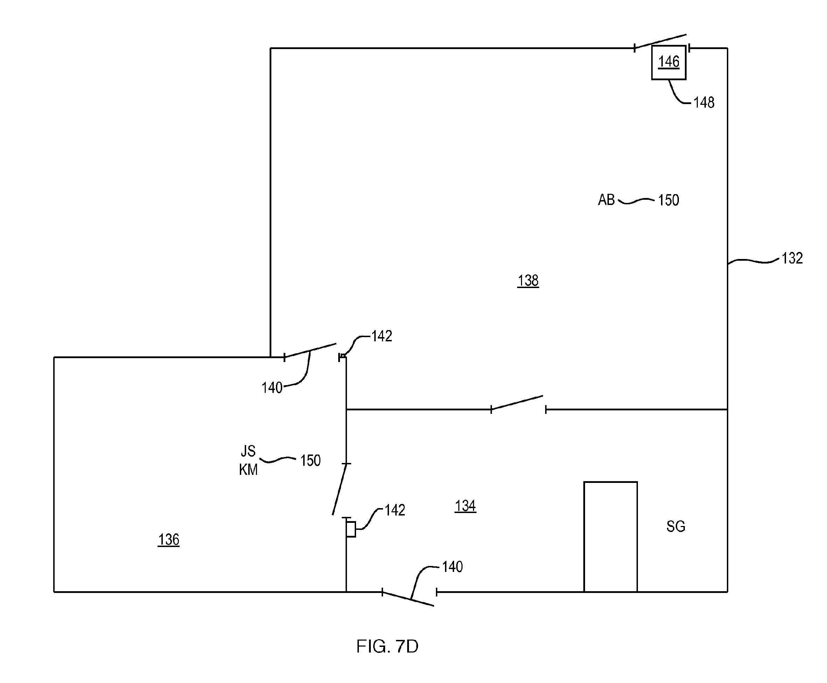

While the previous embodiments have addressed the environmental comfort/efficiencies of buildings, referring to FIGS. 7A through 7D, a pictorial display of a building security system or element 130 is shown. The security system or element 130 is shown with a graphical display of a building 132 having three (3) rooms, including a lobby 134, an office 136, and a manufacturing facility 138. The building 132 has a plurality of doors 140 with sensors 142 which indicate whether the door 140 is open or closed. In addition, the doors 140 in some locations have a pass card control 144 required to enter to certain rooms such as the office 136. The system 130 is therefore able to determine whether a person is in the building and their likely location. In addition, the security system 130 could monitor RFIDs (radio-frequency identification device) 146 attached to certain items within the building 132. For example, a laptop 148 has an RFID 146 attached and is shown in FIG. 7A in the office 136.

One use of the system 130 for example, is when the manager/user of the element 130 returns to the building 132 on a day after a long weekend and determines that the laptop 146 has disappeared. By reviewing the display 30, such as represented in FIG. 1, and the image represented in FIGS. 7A through 7D, the user can see the movement of the laptop 136 and potential locations of various employees represented by initials 150 in this example. By looking at the time lapse showing the doors 140 opening and closing and the location of the laptop 148, the user is able to question employees MJ and AB regarding the passing of the laptop 148 from the office 136 to the manufacturing facility 138 when no one else is in those locations. The user is also able to tie actual video in the security system or element 130 of the system 30 to other elements such as the doors 140 and the RFID 146 to see a hand passing the laptop 148 out the back door 140 to a person in the back of the building 132.

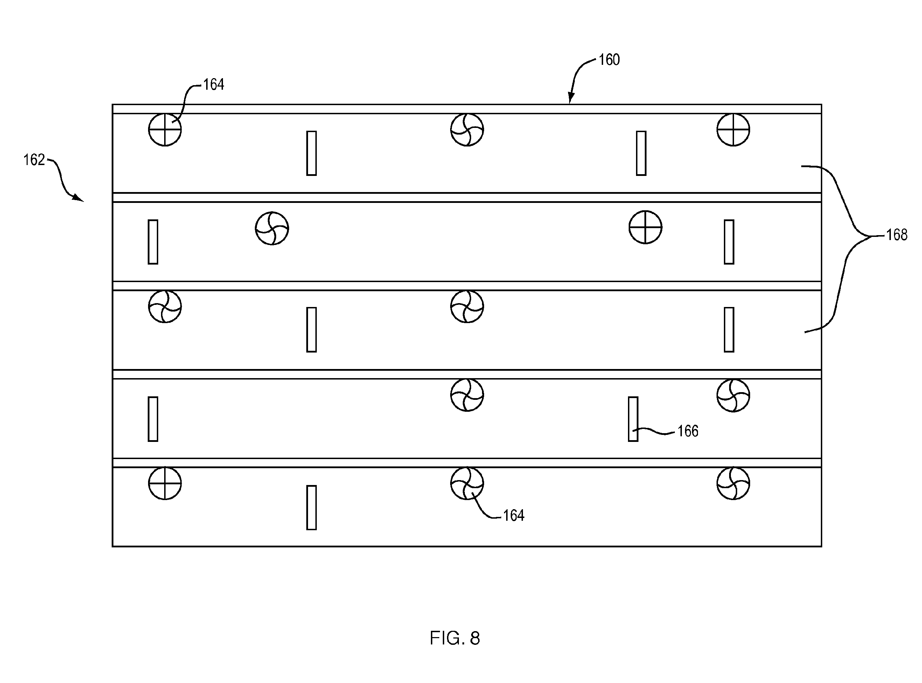

Referring to FIG. 8, an elevation view of a building is shown. The system 160 shown is related to the comfort and efficiency of the building 162. The display 30, as described in FIG. 1, shows a five-story building wherein each story 168 has one or more air handling devices 164 or elements that are represented by fans. In addition, the temperatures at a plurality of thermometers 166 are shown. The user by viewing the display 30 can determine if the air handling devices 164 located on different floors affect other floors. While not shown in the figure, it is recognized that additional data could be incorporated into the display 30 such as the temperature at the air register such as referred to above with respect to FIGS. 6A - 6C.

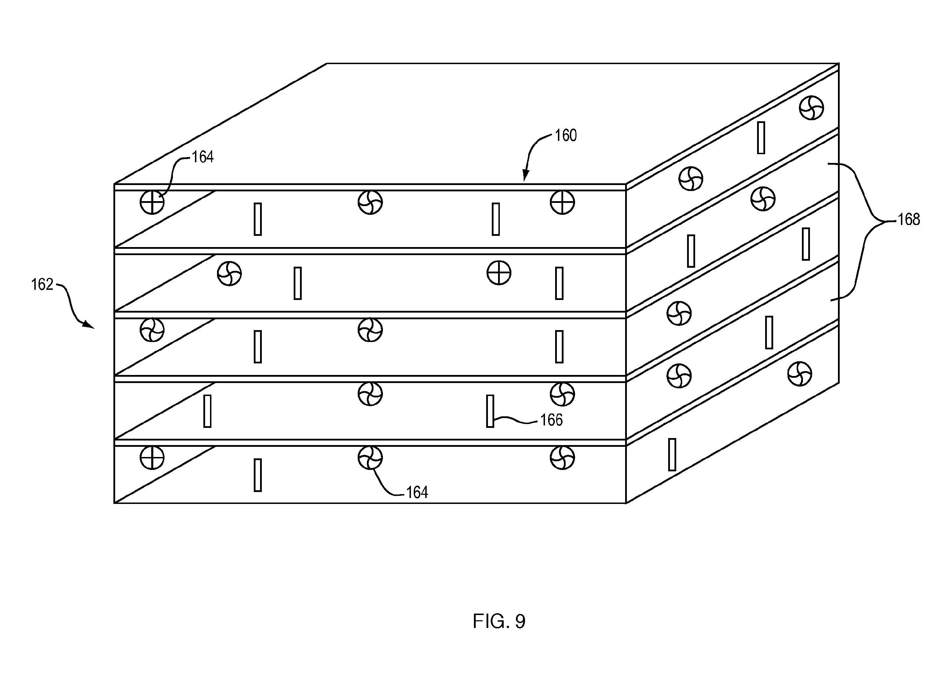

Referring to FIG. 9, a perspective view of the building 162 is shown. Similar data to that display with respect to FIG. 8 is shown. The system 160 has projected a different view based on the user's input through the user input interface 28 shown in FIG. 1

The Logs of building automation and security systems can be converted to such a pictorial display in any of a number of methods known to those skilled in the art. Moreover, the pictorial display may be interactive, allowing a building manager to change the time or time period for when values are displayed. Furthermore, the pictorial display can be playable like a video player. A building manager can play the display either forward or reverse, real-time speed, slow, fast, or record-by-record.

When a building manager can clearly see information concerning individual components of the building automation and security systems, how the components relate to one another, and how the conditions of one or more of the components may affect the conditions of one or more other components, he can assess the conditions more rapidly and more accurately, and as a result, take better action to improve the building's efficiency, occupants' safety, and occupants' comfort.

While the principles of the invention have been described herein, it is to be understood by those skilled in the art that this description is made only by way of example and not as a limitation as to the scope of the invention. Other embodiments are contemplated within the scope of the present invention in addition to the exemplary embodiments shown and described herein. Modifications and substitutions by one of ordinary skill in the art are considered to be within the scope of the present invention.

While the majority of the embodiments discussed above relate to climate system, it is recognized that the systems or elements 24 could be safety systems such as fire. It is also recognized that the system or element 24 could relate to a security system such as access and theft prevention.

While two of the embodiments shown above relate to temperature and air flow, it is recognized that other climate systems such as lighting and humidity could be displayed. In addition, while building and building related structures have been shown, it is recognized that the system 20 could graphically display data relating to other facilities such as parking lots, train yards, stadiums, airports and harbors.

## Claims

1. An apparatus for analyzing an element associated with a facility, the apparatus comprising:
an input mechanism for receiving data related to the element;
a graphical display of a selected portion related to the facility;
an interface device for receiving input;
a controller for driving a display and graphically representing the element a selected portion related to the facility.

2. An apparatus of claim 1 wherein the facility is a building..

3. An apparatus of claim 2 wherein the element is an element associated with the building;
the input mechanism for receiving data related to the element gathers data over time from at least one building element to be analyzed and at least one other building element;
the graphical display of a physical portion of the building displays a selected portion related to the facility, wherein the controller displays graphically in time lapse data from at least one building element to be analyzed and at least one other building element.

4. An apparatus of claim 1 wherein the graphical display and the interface device is merged as a touch screen.

5. An apparatus of claim 1 wherein the input mechanism for gathering data is a data logger and the rate of logging can be varied.

6. An apparatus of claim 1 wherein the apparatus further comprises a data logger for the stored data wherein the plurality of building elements includes at least one building element to be analyzed and the at least one other building element wherein the data has been recorded over time in the data logger.

7. An apparatus of claim 1 wherein the rate of data collection is the same over multiple elements.

8. An apparatus of claim 1 wherein the rate of data collection is set individually per element.

9. An apparatus of claim 1 wherein the data is recorded when an event occurs.

10. A method of analyzing a system of a building comprising:
selecting at least one building system to be analyzed;
selecting at least one other building system that may influence the at least one building system to be analyzed;
gathering data for the at least one building system to be analyzed and the at least one other building system;
determining what data point for the at least one building system to be analyzed and the at least one other building system need to be displayed;
synchronizing the data for the at least one building system to be analyzed and the at least one other building system; and
displaying the data graphical for the at least one building system to be analyzed and the at least one other building system on a display which graphically displays the building wherein the graphical data can be compared to determine how building systems influence each other.

11. A method of claim 17 further comprises selecting a time range to compare the system.

12. A method of claim 18 further comprises selecting a particular region of the building to examine.

13. A method of claim 19 further comprises adjusting the time rate of the display.

14. A method of claim 17 wherein data for both the at least one building system and the at least one other building system is from a collection of numerous building systems being systemically sampled.

15. A method of claim 21 wherein the sampling rate is adjusted.
